# EUROPÄISCHE PATENTSCHRIFT

(11) **EP 3 707 049 B1**
(45) Veröffentlichungstag und Bekanntmachung des Hinweises auf die Patenterteilung: **17.11.2021**
(21) Anmeldenummer: 19708843.8
(22) Anmeldetag: 04.03.2019
(51) Int. Cl.: B61C 15/10, B61K 3/02

(54) **VORRICHTUNG UND VERFAHREN ZUR AUSTRAGUNG EINER REIBWERTOPTIMIERENDEN MISCHUNG**
DEVICE AND METHOD FOR DISPENSING A FRICTION-COEFFICIENT-OPTIMIZING MIXTURE
DISPOSITIF ET PROCÉDÉ DE DÉVERSEMENT D'UN MÉLANGE D'OPTIMISATION DE FRICTION

(30) Priorität: 05.03.2018 AT 501812018
(43) Veröffentlichungstag der Anmeldung: 16.09.2020
(73) Patentinhaber: Nowe GmbH, 31008 Elze (DE)
(72) Erfinder: REICH, Alexander, 40670 Meerbusch (DE); IMBERT, Luc George, 10124 Torino (IT); FREA, Matteo, 10143 Torino (IT)
(74) Vertreter: SONN Patentanwälte OG
(86) Internationale Anmeldenummer: PCT/EP2019/055259
(87) Internationale Veröffentlichungsnummer: WO 2019/170574

(56) Entgegenhaltungen:
- WO-A1-2013/034740
- FR-A- 1 001 707
- JP-A- 2005 075 042
- US-A1- 2002 157 901

## Beschreibung

Die Erfindung betrifft eine Vorrichtung zur Austragung einer reibwertoptimierenden Mischung aus zumindest einem Schmiermittel und zumindest einem Streumittel in den Spalt zwischen Schienenrad eines Schienenfahrzeuges und Schiene, mit zumindest einem Vorratsbehälter für das zumindest eine Schmiermittel und zumindest einem Vorratsbehälter für das zumindest eine Streumittel, mit zumindest einer Dosiereinheit zur Dosierung des zumindest einen Schmiermittels, zumindest einer Dosiereinheit zur Dosierung des zumindest einen Streumittels, zumindest einer Fördereinrichtung zur Förderung des zumindest einen Schmiermittels und zumindest eine Fördereinrichtung zur Förderung des zumindest einen Streumittels, und einer gemeinsamen Austragsdüse zur Austragung des zumindest einen Schmiermittels und des zumindest einen Streumittels in den Spalt zwischen Schienenrad und Schiene.

Weiters betrifft die Erfindung ein Verfahren zur Austragung einer reibwertoptimierenden Mischung aus zumindest einem Schmiermittel und zumindest einem Streumittel in den Spalt zwischen Schienenrad eines Schienenfahrzeuges und Schiene, wobei zumindest ein Schmiermittel aus zumindest einem Vorratsbehälter über zumindest eine Dosiereinheit dosiert und über zumindest eine Fördereinrichtung und zumindest eine Streumittel aus zumindest einem Vorratsbehälter über zumindest einer Dosiereinheit und zumindest eine Fördereinrichtung zu einer gemeinsamen Austragsdüse zur Austragung des zumindest einen Schmiermittels und des zumindest einen Streumittels in den Spalt zwischen Schienenrad und Schiene gefördert wird.

Für die Dynamik eines Schienenfahrzeugs spielt der Kontakt zwischen Schienenrad und Schiene eine entscheidende Rolle, da die Antriebs- und Bremskräfte sowie die Spurführungs- und die Gewichtskräfte über eine relativ kleine Kontaktfläche übertragen werden müssen. Dabei bestimmt das Reibungsverhältnis zwischen Schienenrad und Schiene die optimale Kraftübertragung. Sobald sich das Schienenfahrzeug bewegt, herrschen am Übergang zwischen Schienenrad und Schiene sich permanent ändernde Zustände. Neben dem Verschmutzungsgrad spielt auch das Streckenprofil, insbesondere bei Kurvenfahrten, eine wichtige Rolle für den jeweils aktuellen Zustand im Berührungspunkt von Schienenrad und Schiene. Um die extremen Einflüsse und die damit verbundenen negativen Auswirkungen auf Bremsweg und Verschleiß (Stick-Slip-Effekt) zu minimieren, werden bei Schienenfahrzeugen Sandstreu- bzw. Schmieranlagen eingesetzt.

Beispielsweise beschreibt die EP 2 379 394 B1 ein System zum Streuen von Streugut vor die Räder von Fahrzeugen, insbesondere Schienenfahrzeugen, bei dem das Streugut, insbesondere Sand, bei Bedarf pneumatisch in den Spalt zwischen Rad und Boden eingebracht werden kann, um die Reibung zwischen Rad und Boden zu erhöhen und dadurch den Bremsweg zu reduzieren bzw. das Anfahren des Fahrzeugs zu erleichtern.

Bei derartigen herkömmlichen Streueinrichtungen hängt die Effizienz der ausgebrachten Menge sehr stark von den aerodynamischen Einflüssen ab, die sich in unmittelbarer Nähe vor dem Spalt zwischen Rad und Schiene einstellen und mit zunehmender Geschwindigkeit des Schienenfahrzeugs den Strahl des Streumittels tendenziell nach außen umlenken.

Weiters ist der Einsatz von Schmierstoffen zur Reibwertoptimierung bekannt, um den Verschleiß des Schienenrads und der Schiene, unter anderem im Bereich des Spurkranzes, zu verringern und vor allem bei Kurvenfahrten oder Pendelbewegungen des Schienenfahrzeugs die Lärmentwicklung zu reduzieren.

Beispielsweise beschreibt die AT 515 059 B1 eine Dosiereinrichtung für eine Spurkranzschmieranlage eines Schienenfahrzeugs zum Dosieren und Fördern eines fließfähigen Schmiermittels.

Der Einsatz des Schmiermittels darf sich aus Sicherheitsgründen nicht negativ auf die Länge des Bremswegs des Schienenfahrzeugs auswirken. Um dies gewährleisten zu können, werden in das Schmiermittel Feststoffpartikel beigemischt. Nach einer bestimmten Betriebszeit kommt es, verursacht durch die Fahrdynamik, häufig zur Entmischung der beiden Betriebsstoffe. Als Folge kann sich die Charakteristik des gesamten Schmierstoffs ändern. Zusätzlich kann die hohe Konzentration der Feststoffe zur Verstopfung der Austragseinrichtung führen.

Aus der WO 2013/034740 A1 und der WO 2015/52307 A1 sind Ausbringeinrichtungen für Mischungen von Reibwertmodifikatoren für ein Schienenfahrzeug bekannt geworden, wobei mehrere Vorratsbehälter für Reibwertmodifikatoren unterschiedlichen Materials und/oder unterschiedlicher Größen und/oder unterschiedlicher Beschaffenheit vorgesehen sind, um diese gegebenenfalls zu mischen und eine entsprechende Partikelmischung auf die Schiene aufzubringen. Dabei wird die Partikelmischung über eine Transporteinrichtung durch ein Förderrohr in den Spalt zwischen Schienenrad und Schiene eingebracht.

Die Aufgabe der vorliegenden Erfindung besteht in der Schaffung einer oben genannten Vorrichtung und eines oben genannten Verfahrens zur Austragung einer reibwertoptimierenden Mischung, welche eine effiziente und störungsfreie Austragung einer reibwertoptimierenden Mischung aus zumindest einem Schmiermittel und zumindest einem Streumittel in den Spalt zwischen Schienenrad eines Schienenfahrzeugs und Schiene gewährleistet. Die Vorrichtung und das Verfahren sollen möglichst zuverlässig und sicher funktionieren und es soll eine Entmischung der Komponenten der reibwertoptimierenden Mischung verhindert werden. Nachteile bekannter Vorrichtungen und Verfahren sollen vermieden oder zumindest reduziert werden.

Gelöst wird die erfindungsgemäße Aufgabe durch eine oben genannte Vorrichtung, bei der die Fördereinrichtung zur Förderung des zumindest einen Schmiermittels und die Fördereinrichtung des zumindest einen Streumittels getrennt voneinander ausgebildet sind und in der gemeinsamen Austragsdüse münden, sodass die reibwertoptimierende Mischung erst bei der Austragung in den Spalt zwischen Schienenrad und Schiene aus dem zumindest einen Schmiermittel und dem zumindest einen Streumittel gebildet wird, und dass eine zusätzliche Druckluftleitung vorgesehen ist, welche in der gemeinsamen Austragsdüse mündet. Erfindungsgemäß ist daher vorgesehen, dass die Vermischung des zumindest einen Schmiermittels und des zumindest einen Streumittels zur Bildung der reibwertoptimierenden Mischung erst im unmittelbaren Wirkpunkt, also bei der Austragung in den Spalt zwischen Schienenrad und Schiene, in der gemeinsamen Austragsdüse stattfindet. Dadurch kann eine Entmischung der zumindest zwei Komponenten der reibwertoptimierenden Mischung verhindert und ein optimaler Einsatz der gewünschten Menge an Schmiermittel und Streumittel in Abhängigkeit des jeweiligen Einsatzfalls gewährleistet werden. In der Regel werden ein Schmiermittel und ein Streumittel gemischt. Es können aber auch mehr Schmiermittel und mehr Streumittel zur Bildung der reibwertoptimierenden Mischung herangezogen und vermischt werden. Die gegenständliche Vorrichtung erlaubt eine optimale Portionierung der zumindest zwei Komponenten der reibwertoptimierenden Mischung, welche vorzugsweise abhängig vom jeweiligen Ist-Zustand am Übergang zwischen Schienenrad und Schiene gemischt und mit einer passenden Austragsgeschwindigkeit und Austragsenergie in den Spalt zwischen Schienenrad und Schiene eingebracht wird. Die Förderleitungen der zumindest zwei Komponenten, dem Schmiermittel und dem Streumittel, der reibwertoptimierenden Mischung werden getrennt vom jeweiligen Vorratsbehälter bis zur gemeinsamen Austragsdüse geführt. Die Dosierung der Schmiermittel und Streumittel kann einzeln und unabhängig voneinander vorgenommen werden. Durch die zusätzliche und autarke Druckluftleitung kann die Austragsenergie des Strahls der reibwertoptimierenden Mischung verstärkt und die Komponenten der reibwertoptimierenden Mischung konzentrierter in den Spalt zwischen Schienenrad und Schiene gefördert werden.

Gemäß einem Merkmal der Erfindung ist die zumindest eine Dosiereinheit für das zumindest eine Schmiermittel und bzw. oder die zumindest eine Dosiereinheit für das zumindest eine Streumittel durch zumindest ein Zellenrad gebildet. Ein Zellenrad stellt eine Realisierungsmöglichkeit für eine Dosiereinheit dar. Für die Förderung eines flüssigen Schmiermittels kann natürlich auch eine Pumpe eingesetzt werden.

Ebenso kann die zumindest eine Dosiereinheit für das zumindest eine Schmiermittel und bzw. oder die zumindest eine Dosiereinheit für das zumindest eine Streumittel durch zumindest einen Hubkolben gebildet sein. Dies ist eine Alternative oder zusätzliche Variante für eine Dosiereinheit. Dabei kann der Kolben insbesondere mit einem Elektromagnet oder einem Zylinder als Antriebsmittel kombiniert werden.

Die zumindest eine Fördereinrichtung für das zumindest eine Schmiermittel und bzw. oder die zumindest eine Fördereinrichtung für das zumindest eine Streumittel ist vorzugsweise durch eine Druckluftquelle und eine Druckluftleitung gebildet. Die Verwendung von Druckluft zur Förderung des zumindest einen Schmiermittels und des zumindest einen Streumittels hat sich als besonders zuverlässig und effizient bewährt.

Weiters ist es von Vorteil, wenn die zusätzliche Druckluft um die Mündungen für das Streumittel und das Schmiermittel in der Austragsdüse mündet, was hinsichtlich der Förderung und Effizienz des Ausbringens der reibwertoptimierenden Mischung vorteilhaft ist. Die reibwertoptimierende Mischung wird von der sie umgebenden Druckluft quasi geschützt, wodurch Einflüsse wie z.B. Seitenwind zu weniger Ablenkung des Strahls führt. Vorzugsweise ist die Mündung der Druckluftleitungen der Austragsdüse ringförmig um die Mündungen für das zumindest eine Streumittel und das zumindest eine Schmiermittel angeordnet.

Wenn eine Steuereinheit vorgesehen ist, welche mit jeder Dosiereinheit und jeder Fördereinrichtung verbunden ist, kann eine optimale Dosierung der einzelnen Komponenten der reibwertoptimierenden Mischung, also des zumindest einen Schmiermittels und des zumindest einen Streumittels, erreicht werden. Die reibwertoptimierende Mischung kann aufgrund hinterlegter Daten oder Vorschriften entsprechend gemischt und dosiert werden, sodass immer ein optimaler Einsatz und eine optimale Wirkung für optimale Reibung zwischen Rad und Schiene gewährleistet werden kann.

Idealerweise ist die Steuereinheit mit einem Sensor zur Erfassung der Geschwindigkeit des Schienenfahrzeugs, Sensoren zur Erfassung von Umweltparametern und bzw. oder Sensoren zur Erfassung des Reibungskoeffizienten zwischen Schienenrad und Schiene verbunden. Dadurch wird ein Regelkreis geschaffen, der eine Regelung der Dosierung der Bestandteile der reibwertoptimierenden Mischung in Abhängigkeit von Einflussparametern, wie Umweltparametern und bzw. oder dem Ist-Zustand des Kontakts zwischen Schienenrad und Schiene sowie insbesondere der Geschwindigkeit des Schienenfahrzeugs vorsieht. Als Umweltparameter können Einflussfaktoren wie Temperatur, Feuchte, Windgeschwindigkeit, etc. erfasst und bei der Regelung berücksichtigt werden. Dies gewährleistet immer den Einsatz einer optimalen Menge und optimalen Zusammensetzung des zumindest einen Schmiermittels und des zumindest einen Streumittels in Abhängigkeit des jeweiligen Einsatzfalls. Über die Messung des aktuellen Zustands im Spalt zwischen Schienenrad und Schiene kann unter Zuhilfenahme entsprechender Algorithmen der Reibungskoeffizient zwischen Schienenrad und Schiene ermittelt werden. Auch die Verbindung der Steuereinheit mit einer Vorrichtung zur Erfassung der Position des Schienenfahrzeugs, beispielsweise einem GPS-Empfänger, kann zur positionsabhängigen Dosierung des Schmiermittels und Streumittels verwendet werden.

Zumindest ein Schmiermittel kann durch eine vorzugsweise biologisch abbaubare Flüssigkeit gebildet sein. Als Schmiermittel eignen sich insbesondere Flüssigkeiten, welche die Schienenflanke und den Schienenkopf und den Spurkranz des Schienenrads optimal schützen und den Verschleiß und die Lärmentwicklung minimieren. Um zu verhindern, dass die Umwelt durch den Austrag der reibwertoptimierenden Mischung belastet wird, ist es von Vorteil, wenn die Flüssigkeit biologisch abbaubar ist. Beispielsweise kommen Schmierstoffe zum Einsatz, welche keramische Schmierstoffe und synthetische Trägermittel enthalten. Es sind auch Schmiermittel in fester Form bzw. in Form von Kapseln, welche das flüssige Schmiermittel enthalten, denkbar.

Alternativ oder zusätzlich kann zumindest ein Schmiermittel auch durch einen vorzugsweise biologisch abbaubaren Feststoff gebildet sein. Auch Feststoffe in Kombination mit flüssigem Schmiermittel oder ohne die Mischung mit flüssigen Schmiermitteln kommen für eine Anwendung infrage.

Gemäß einem weiteren Merkmal der Erfindung wird zumindest ein Streumittel durch Sand, vorzugsweise Quarzsand, gebildet. Sand zeichnet sich durch niedrige Kosten und nahezu unbegrenzte Verfügbarkeit aus. Natürlich ist der Einsatz von anderen Streumitteln, wie beispielsweise Schlacke, Aluminiumoxid oder künstlich hergestellten Granulaten, ebenso denkbar.

Gelöst wird die erfindungsgemäße Aufgabe in verfahrensmäßiger Hinsicht dadurch, dass das zumindest eine Schmiermittel und das zumindest eine Streumittel getrennt voneinander dosiert und zur gemeinsamen Austragsdüse gefördert werden, sodass die reibwertoptimierende Mischung erst bei der Austragung in den Spalt zwischen Schienenrad und Schiene aus dem zumindest einen Schmiermittel und dem zumindest einen Streumittel gebildet wird, und dass Druckluft in einer zusätzlichen Druckluftleitung in die gemeinsame Austragsdüse befördert wird. Zu den dadurch erzielbaren Vorteilen wird auf die obige Beschreibung der Vorrichtung verwiesen. Durch die zusätzliche Drucklunft wird eine verstärkte Austragsenergie des Strahls der reibwertoptimierenden Mischung in den Spalt zwischen Schienenrad und Schiene erzielt.

Wie bereits oben im Zusammenhang mit der Vorrichtung beschrieben, wird das zumindest eine Schmiermittel und bzw. oder das zumindest eine Streumittel beispielsweise mit zumindest einem Zellenrad und bzw. oder mit zumindest einem Hubkolben dosiert.

Das zumindest eine Schmiermittel und bzw. oder das zumindest eine Streumittel wird vorzugsweise pneumatisch mittels Druckluft zur gemeinsamen Austragsdüse gefördert.

Idealerweise wird das zumindest eine Schmiermittel und bzw. oder das zumindest eine Streumittel getrennt voneinander über eine Steuereinheit dosiert. Dadurch kann in Abhängigkeit des jeweiligen Anwendungsfalls immer die optimale Zusammensetzung der reibwertoptimierenden Mischung erreicht werden und für eine optimale Anwendung die geringstmögliche Menge an Schmiermittel und Streumittel ausgetragen werden.

Wenn die Steuerung der Dosierung und Förderung des zumindest einen Schmiermittels und des zumindest einen Streumittels in Abhängigkeit der Geschwindigkeit des Schienenfahrzeugs von erfassten Umweltparametern und bzw. oder vom erfassten Reibungskoeffizienten zwischen Schienenrad und Schiene geregelt wird, kann eine optimale Zusammensetzung der reibwertoptimierenden Mischung und eine optimale Einstellung der Menge in Abhängigkeit der jeweiligen gemessenen Ereignisse und Zustände erfolgen. Auch die geografische Position des Schienenfahrzeugs kann in die Regelung miteinbezogen werden.

Als zumindest ein Schmiermittel kann eine vorzugsweise biologisch abbaubare Flüssigkeit und bzw. oder ein vorzugsweise biologisch abbaubarer Feststoff verwendet werden.

Als zumindest ein Streumittel kann Sand, vorzugsweise Quarzsand, verwendet werden.

Die vorliegende Erfindung wird anhand der beigefügten Zeichnung näher erläutert. Darin zeigen
- Fig. 1: eine bevorzugte Ausführungsform einer Vorrichtung zur Austragung einer reibwertoptimierenden Mischung aus zumindest einem Schmiermittel und zumindest einem Streumittel in den Spalt eines Schienenfahrzeugs und Schiene; und
- Fig. 2: eine Detailansicht auf eine bevorzugte Ausführungsform einer gemeinsamen Austragsdüse in geschnittener Darstellung.

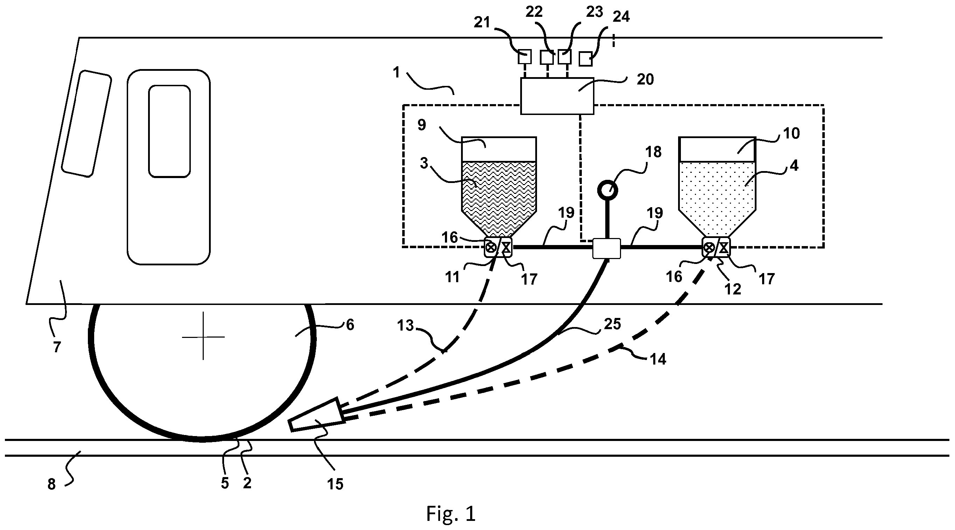

In Fig. 1 ist eine Vorrichtung 1 zur Austragung einer reibwertoptimierenden Mischung 2 aus zumindest einem Schmiermittel 3 und zumindest einem Streumittel 4 in den Spalt 5 zwischen Schienenrad 6 eines Schienenfahrzeugs 7 und der Schiene 8 dargestellt. Für jedes Schmiermittel 3 ist ein Vorratsbehälter 9 und für jedes Streumittel 4 ein Vorratsbehälter 10 vorgesehen. Wenn mehrere Schmiermittel 3 und mehrere Streumittel 4 zum Einsatz kommen können, sind entsprechend mehr Vorratsbehälter 9 bzw. 10 angeordnet. Über eine Dosiereinheit 11 kann das Schmiermittel 3 in der gewünschten Menge in eine nachfolgende Fördereinrichtung 13 dosiert werden. Die Dosiereinheit 12 kann beispielsweise durch eine Pumpe (nicht dargestellt), ein Zellenrad 16 oder einen Hubkolben 17 gebildet sein.

Auch unter jedem Vorratsbehälter 10 für das Streumittel 4 ist eine Dosiereinheit 12 zur Dosierung des Streumittels 4 angeordnet, welche wiederum durch ein Zellenrad 16 oder einen Hubkolben 17 gebildet sein kann, und eine gewünschte Menge des Streumittels 4 in die Fördereinrichtung 14 dosiert. Die Fördereinrichtungen 13, 14 zur Beförderung des zumindest einen Schmiermittels 3 und des zumindest einen Streumittels 4 münden in einer gemeinsamen Austragsdüse 15, welche an einer geeigneten Stelle vor dem Schienenrad 6 des Schienenfahrzeugs 7 angeordnet ist. Dadurch kann die dosierte Menge an Schmiermittel 3 und Streumittel 4, welche die reibwertoptimierende Mischung 2 bilden, optimal in den Spalt 5 zwischen Schienenrad 6 des Schienenfahrzeugs 7 und Schiene 8 eingebracht werden. Zur Förderung des zumindest einen Schmiermittels 3 und des zumindest einen Streumittels 4 kann jeweils eine Druckluftquelle 18 und eine Druckluftleitung 19 verwendet werden.

Über eine von der Druckluftquelle 18 abgezweigte zusätzliche und autarke Druckluftleitung 25, welche in der gemeinsamen Austragsdüse 15 mündet, wird eine Verbesserung der Austragung der reibwertoptimierenden Mischung 2 erzielt.

Vorzugsweise ist eine Steuereinheit 20 vorgesehen, welche mit jeder Dosiereinheit 11, 12 und jeder Fördereinrichtung 13, 14 verbunden ist. Dadurch kann allenfalls unter Berücksichtigung von Einflussfaktoren und Umweltparametern eine optimale Dosierung und Mischung der Komponenten der reibwertoptimierenden Mischung 2 erzielt werden. Zu diesem Zweck kann die Steuereinheit 20 mit einem Sensor 21 zur Erfassung der Geschwindigkeit v des Schienenfahrzeugs 7, Sensoren 22 zur Erfassung von Umweltparametern, wie z.B. Temperatur, Luftfeuchtigkeit oder Windgeschwindigkeit, verbunden sein. Schließlich kann die Steuereinheit 20 auch mit Sensoren 23 zur Erfassung des Zustands zwischen Schienenrad 6 und Schiene 8 verbunden sein. Derartige Sensoren 23 können beispielsweise durch optische Einrichtungen gebildet sein. Über die mit diesen Sensoren 23 erfassten Werte kann der Reibungskoeffizient µ zwischen Schienenrad 6 und Schiene 8 über entsprechende Algorithmen ermittelt werden. Weiters kann ein GPS-Empfänger 24 mit der Steuereinrichtung 20 verbunden sein, um die aktuelle geografische Position des Schienenfahrzeugs 7 erfassen zu können und die Regelung der Austragung der reibwertoptimierenden Mischung 2 auch in Abhängigkeit der Position des Schienenfahrzeugs 7 vornehmen zu können.

Das zumindest eine Schmiermittel 3 ist vorzugsweise durch eine biologisch abbaubare Flüssigkeit und/oder einen vorzugsweise biologisch abbaubaren Feststoff gebildet. Das zumindest eine Streumittel 4 wird vorzugsweise durch Sand, wie z.B. Quarzsand, gebildet.

Die erfindungsgemäße Vorrichtung 1 zur Austragung einer reibwertoptimierenden Mischung 2 aus zumindest einem Schmiermittel 3 und zumindest einem Streumittel 4 in den Spalt 5 zwischen Schienenrad 6 eines Schienenfahrzeugs 7 und Schiene 8 ist durch einen optimalen Einsatz der Komponenten Schmiermittel und Streumittel für eine optimale Wirkung, d.h. ein optimales Reibungsverhältnis zwischen Rad 6 und Schiene 8, gekennzeichnet. Durch die getrennte Förderung des zumindest einen Schmiermittels 3 und des zumindest einen Streumittels 4 zur Austragsdüse 15 und dem bevorzugten Einsatz von Druckluft für die Förderung kommt es erst unmittelbar vor dem Ausbringen der reibwertoptimierenden Mischung 2 in den Spalt 5 zwischen Schienenrad 6 und Schiene 8 zur Vermischung, wodurch eine Entmischung der Komponenten verhindert werden kann.

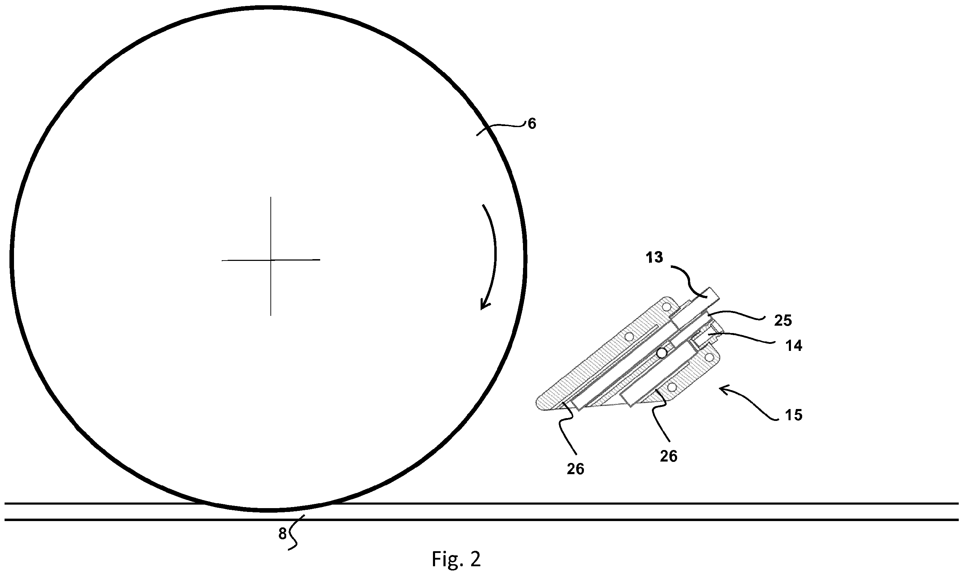

Fig. 2 zeigt eine Detailansicht auf eine bevorzugte Ausführungsform einer gemeinsamen Austragsdüse 15 in geschnittener Darstellung. In der Austragsdüse 15 münden die Leitungen der Fördereinrichtung 13 zur Förderung des Schmiermittels 3 und Leitungen der Fördereinrichtung 14 zur Förderung des Streumittels 4 sowie die zusätzliche Druckluftleitung 25. Die Druckluft mündet in einem vorzugsweise ringförmig um die Mündungen für das Schmiermittel 3 und das Streumittel 4 angeordneten Ringspalt 26. Dadurch wird die reibwertoptimierende Mischung 2 durch den sie umgebenden Druckluftstrahl geschützt, wodurch die Austragung der reibwertoptimierenden Mischung 2 effizienter gezielt in den Spalt zwischen Schienenrad 6 und Schiene 8 erfolgen kann. Anstelle einer kreisförmig umgebenden Mündung der zusätzlichen Druckluftleitung 25 kann auch oberhalb der Mündung für das Schmiermittel 3 und unterhalb der Mündung für das Steuermittel 4 eine Mündung für die Druckluft angeordnet werden.

## Patentansprüche

1. Vorrichtung (1) zur Austragung einer reibwertoptimierenden Mischung (2) aus zumindest einem Schmiermittel (3) und zumindest einem Streumittel (4) in den Spalt (5) zwischen Schienenrad (6) eines Schienenfahrzeuges (7) und Schiene (8), mit zumindest einem Vorratsbehälter (9) für das zumindest eine Schmiermittel (3) und zumindest einem Vorratsbehälter (10) für das zumindest eine Streumittel (4), mit zumindest einer Dosiereinheit (11) zur Dosierung des zumindest einen Schmiermittels (3), zumindest einer Dosiereinheit (12) zur Dosierung des zumindest einen Streumittels (4), zumindest einer Fördereinrichtung (13) zur Förderung des zumindest einen Schmiermittels (3) und zumindest eine Fördereinrichtung (14) zur Förderung des zumindest einen Streumittels (4), und einer gemeinsamen Austragsdüse (15) zur Austragung des zumindest einen Schmiermittels (3) und des zumindest einen Streumittels (4) in den Spalt (5) zwischen Schienenrad (6) und Schiene (8), **dadurch gekennzeichnet, dass** die Fördereinrichtung (13) zur Förderung des zumindest einen Schmiermittels (3) und die Fördereinrichtung (14) des zumindest einen Streumittels (4) getrennt voneinander ausgebildet sind, und in der gemeinsamen Austragsdüse (15) münden, sodass die reibwertoptimierende Mischung (2) erst bei der Austragung in den Spalt (5) zwischen Schienenrad (6) und Schiene (8) aus dem zumindest einen Schmiermittel (3) und dem zumindest einen Streumittel (4) gebildet wird, und dass eine zusätzliche Druckluftleitung (25) vorgesehen ist, welche in der gemeinsamen Austragsdüse (15) mündet.

2. Vorrichtung (1) nach Anspruch 1, **dadurch gekennzeichnet, dass** die zumindest eine Dosiereinheit (11) für das zumindest eine Schmiermittel (3) und bzw. oder die zumindest eine Dosiereinheit (12) für das zumindest eine Streumittel (4) durch zumindest ein Zellenrad (16) gebildet ist.

3. Vorrichtung (1) nach Anspruch 1 oder 2, **dadurch gekennzeichnet, dass** die zumindest eine Dosiereinheit (11) für das zumindest eine Schmiermittel (3) und bzw. oder die zumindest eine Dosiereinheit (12) für das zumindest eine Streumittel (4) durch zumindest einen Hubkolben (17) gebildet ist.

4. Vorrichtung (1) nach einem der Ansprüche 1 bis 3, **dadurch gekennzeichnet, dass** die zumindest eine Fördereinrichtung (13) für das zumindest eine Schmiermittel (3) und bzw. oder die zumindest eine Fördereinrichtung (14) für das zumindest eine Streumittel (4) durch eine Druckluftquelle (18) und eine Druckluftleitung (19) gebildet ist.

5. Vorrichtung (1) nach einem der Ansprüche 1 bis 4, **dadurch gekennzeichnet, dass** eine Steuereinheit (20) vorgesehen ist, welche mit jeder Dosiereinheit (11, 12) und jeder Fördereinrichtung (13, 14) verbunden ist.

6. Vorrichtung (1) nach Anspruch 5, **dadurch gekennzeichnet, dass** die Steuereinheit (20) mit einem Sensor (21) zur Erfassung der Geschwindigkeit (v) des Schienenfahrzeugs (7), Sensoren (22) zur Erfassung von Umweltparametern und bzw. oder Sensoren (23) zur Erfassung des Reibungskoeffizienten (µ) zwischen Schienenrad (6) und Schiene (8) verbunden ist.

7. Vorrichtung (1) nach einem der Ansprüche 1 bis 6, **dadurch gekennzeichnet, dass** zumindest ein Schmiermittel (3) durch eine vorzugsweise biologisch abbaubare Flüssigkeit gebildet ist.

8. Vorrichtung (1) nach einem der Ansprüche 1 bis 7, **dadurch gekennzeichnet, dass** zumindest ein Schmiermittel (3) durch einen vorzugsweise biologisch abbaubaren Feststoff gebildet ist.

9. Vorrichtung (1) nach einem der Ansprüche 1 bis 8, **dadurch gekennzeichnet, dass** zumindest ein Streumittel (4) durch Sand, vorzugsweise Quarzsand, gebildet ist.

10. Verfahren zur Austragung einer reibwertoptimierenden Mischung (2) aus zumindest einem Schmiermittel (3) und zumindest einem Streumittel (4) in den Spalt (5) zwischen Schienenrad (6) eines Schienenfahrzeuges (7) und Schiene (8), wobei zumindest ein Schmiermittel (3) aus zumindest einem Vorratsbehälter (9) über zumindest eine Dosiereinheit (11) dosiert und über zumindest eine Fördereinrichtung (13) und zumindest ein Streumittel (4) aus zumindest einem Vorratsbehälter (10) über zumindest einer Dosiereinheit (12) und zumindest eine Fördereinrichtung (14) zu einer gemeinsamen Austragsdüse (15) zur Austragung des zumindest einen Schmiermittels (3) und des zumindest einen Streumittels (4) in den Spalt (5) zwischen Schienenrad (6) und Schiene (8) gefördert wird, **dadurch gekennzeichnet, dass** das zumindest eine Schmiermittel (3) und das zumindest eine Streumittel (4) getrennt voneinander dosiert und zur gemeinsamen Austragsdüse (15) gefördert wird, sodass die reibwertoptimierende Mischung (2) erst bei der Austragung in den Spalt (5) zwischen Schienenrad (6) und Schiene (8) aus dem zumindest einen Schmiermittel (3) und dem zumindest einen Streumittel (4) gebildet wird, und dass Druckluft in einer zusätzlichen Druckluftleitung (25) in die gemeinsame Austragsdüse (15) befördert wird.

11. Verfahren nach Anspruch 10, **dadurch gekennzeichnet, dass** das zumindest eine Schmiermittel (3) und bzw. das zumindest eine Streumittel (4) mit zumindest einem Zellenrad (16) dosiert wird.

12. Verfahren nach Anspruch 10 oder 11, **dadurch gekennzeichnet, dass** das zumindest eine Schmiermittel (3) und bzw. das zumindest eine Streumittel (4) mit zumindest einem Hubkolben (17) dosiert wird.

13. Verfahren nach einem der Ansprüche 10 bis 12, **dadurch gekennzeichnet, dass** das zumindest eine Schmiermittel (3) und bzw. oder das zumindest eine Streumittel (4) pneumatisch mittels Druckluft zur gemeinsamen Austragsdüse (15) gefördert wird.

14. Verfahren nach einem der Ansprüche 10 bis 13, **dadurch gekennzeichnet, dass** das zumindest eine Schmiermittel (3) und bzw. oder das zumindest eine Streumittel (4) getrennt voneinander über eine Steuereinheit (20) dosiert wird.

15. Verfahren nach Anspruch 14, **dadurch gekennzeichnet, dass** die Steuerung der Dosierung und Förderung des zumindest einen Schmiermittels (3) und des zumindest einen Streumittels (4) in Abhängigkeit der Geschwindigkeit (v) des Schienenfahrzeugs (7) von erfassten Umweltparametern und bzw. oder vom erfassten Reibungskoeffizienten (µ) zwischen Schienenrad (6) und Schiene (8) geregelt wird.

16. Verfahren nach einem der Ansprüche 10 bis 15, **dadurch gekennzeichnet, dass** als zumindest ein Schmiermittel (3) eine vorzugsweise biologisch abbaubare Flüssigkeit verwendet wird.

17. Verfahren nach einem der Ansprüche 10 bis 16, **dadurch gekennzeichnet, dass** als zumindest ein Schmiermittel (3) ein vorzugsweise biologisch abbaubarer Feststoff verwendet wird.

18. Verfahren nach einem der Ansprüche 10 bis 17, **dadurch gekennzeichnet, dass** als zumindest ein Streumittel (4) Sand, vorzugsweise Quarzsand, verwendet wird.

## Claims

1. A device (1) for dispensing a friction-coefficient-optimizing mixture (2) of at least one lubricant (3) and at least one grit (4) into the gap (5) between a rail wheel (6) of a rail vehicle (7) and a rail (8), the device comprising at least one reservoir (9) for the at least one lubricant (3), at least one reservoir (10) for the at least one grit (4), at least one metering unit (11) for metering the at least one lubricant (3), at least one metering unit (12) for metering the at least one grit (4), at least one delivery apparatus (13) for delivering the at least one lubricant (3), at least one delivery apparatus (14) for delivering the at least one grit (4), and a common dispensing nozzle (15) for dispensing the at least one lubricant (3) and the at least one grit (4) into the gap (5) between the rail wheel (6) and the rail (8), **characterized in that** the delivery apparatus (13) for delivering the at least one lubricant (3) and the delivery apparatus (14) for delivering the at least one grit (4) are separate from each other and end in the common dispensing nozzle (15) so that the friction-coefficient-optimizing mixture (2) is not formed from the at least one lubricant (3) and the at least one grit (4) until it is dispensed into the gap (5) between the rail wheel (6) and the rail (8), and an additional compressed air line (25) is provided, which ends in the common dispensing nozzle (15).

2. The device (1) according to Claim 1, **characterised in that** the at least one metering unit (11) for the at least one lubricant (3) and/or the at least one metering unit (12) for the at least one grit (4) is formed by at least one cell wheel (16).

3. The device (1) according to Claim 1 or 2, **characterised in that** the at least one metering unit (11) for the at least one lubricant (3) and/or the at least one metering unit (12) for the at least one grit (4) is formed by at least one piston (17).

4. The device (1) according to any one of Claims 1 to 3, **characterized in that** the at least one delivery apparatus (13) for delivering the at least one lubricant (3) and/or the at least one delivery apparatus (14) for delivering the at least one grit (4) is formed by a compressed air source (18) and a compressed air line (19) .

5. The device (1) according to any one of Claims 1 to 4, **characterized in that** a control unit (20) is provided, which is connected to each metering unit (11, 12) and each delivery apparatus (13, 14).

6. The device (1) according to Claim 5, **characterized in that** the control unit (20) is connected to a sensor (21) for sensing the speed (v) of the rail vehicle (7), sensors (22) for sensing environmental parameters and/or sensors (23) for sensing the friction coefficient (µ) between the rail wheel (6) and the rail (8) .

7. The device (1) according to any one of Claims 1 to 6, **characterized in that** at least one lubricant (3) is formed by a preferably biodegradable liquid.

8. The device (1) according to any one of Claims 1 to 7, **characterized in that** at least one lubricant (3) is formed by a preferably biodegradable solid.

9. The device (1) according to any one of Claims 1 to 8, **characterized in that** at least one grit (4) is formed by sand, preferably quartz sand.

10. A method for dispensing a friction-coefficient-optimizing mixture (2) of at least one lubricant (3) and at least one grit (4) into the gap (5) between a rail wheel (6) of a rail vehicle (7) and a rail (8), wherein at least one lubricant (3) is delivered out of at least one reservoir (9), metered via at least one metering unit (11), and via at least one delivery apparatus (13), and at least one grit (4) is delivered out of at least one reservoir (10) via at least one metering unit (12) and at least one delivery apparatus (14) to a common dispensing nozzle (15) for dispensing the at least one lubricant (3) and the at least one grit (4) into the gap (5) between the rail wheel (6) and the rail (8), **characterized in that** the at least one lubricant (3) and the at least one grit (4) are metered and delivered to the common dispensing nozzle (15) separately from each other so that the friction-coefficient-optimizing mixture (2) is not formed from the at least one lubricant (3) and the at least one grit (4) until it is dispensed into the gap (5) between the rail wheel (6) and the rail (8), and compressed air in an additional compressed air line (25) is delivered into the common dispensing nozzle (15).

11. The method according to Claim 10, **characterized in that** the at least one lubricant (3) and/or the at least one grit (4) is metered using at least one cell wheel (16).

12. The method according to Claim 10 or 11, **characterized in that** the at least one lubricant (3) and/or the at least one grit (4) is metered using at least one piston (17).

13. The method according to any one of Claims 10 to 12, **characterized in that** the at least one lubricant (3) and/or the at least one grit (4) is delivered pneumatically by means of compressed air to the common dispensing nozzle (15).

14. The method according to any one of Claims 10 to 13, **characterized in that** the at least one lubricant (3) and/or the at least one grit (4) are metered separately from each other via a control unit (20).

15. The method according to Claim 14, **characterized in that** the metering and delivery of the at least one lubricant (3) and the at least one grit (4) are controlled depending on the speed (v) of the rail vehicle (7), on sensed environmental parameters and/or on the sensed friction coefficient (µ) between the rail wheel (6) and the rail (8).

16. The method according to any one of Claims 10 to 15, **characterized in that** a preferably biodegradable liquid is used as at least one lubricant (3).

17. The method according to any one of Claims 10 to 16, **characterized in that** a preferably biodegradable solid is used as at least one lubricant (3).

18. The method according to any one of Claims 10 to 17, **characterized in that** sand, preferably quartz sand, is used as at least one grit (4).

## Revendications

1. Dispositif (1) pour déverser un mélange d'optimisation de friction (2) composé d'au moins un lubrifiant (3) et d'au moins un dispersant (4) dans la fente (5) entre la roue ferroviaire (6) d'un véhicule ferroviaire (7) et un rail (8), avec au moins un récipient de stockage (9) pour le au moins un lubrifiant (3) et au moins un récipient de stockage (10) pour le au moins un dispersant (4), avec au moins une unité de dosage (11) pour doser le au moins un lubrifiant (3), au moins une unité de dosage (12) pour doser le au moins un dispersant (4), au moins un dispositif de transport (13) pour transporter le au moins un lubrifiant (3) et au moins un dispositif de transport (14) pour transporter le au moins un dispersant (4), et une buse de déversement (15) commune pour déverser le au moins un lubrifiant (3) et le au moins un dispersant (4) dans la fente (5) entre la roue ferroviaire (6) et le rail (8), **caractérisé en ce que** le dispositif de transport (13) pour transporter le au moins un lubrifiant (3) et le dispositif de transport (14) du au moins un dispersant (4) sont réalisés séparément l'un de l'autre, et débouchent dans la buse de déversement (15) commune, de sorte que le mélange d'optimisation de friction (2) n'est formé du au moins un lubrifiant (3) et du au moins un dispersant (4) que lors du déversement dans la fente (5) entre la roue ferroviaire (6) et le rail (8), et qu'une conduite d'air comprimé (25) supplémentaire est prévue, laquelle débouche dans la buse de déversement (15) commune.

2. Dispositif (1) selon la revendication 1, **caractérisé en ce que** l'une au moins unité de dosage (11) pour le au moins un lubrifiant (3) et/ou l'une au moins unité de dosage (12) pour le au moins un dispersant (4) est formée par au moins une roue à alvéoles (16).

3. Dispositif (1) selon la revendication 1 ou 2, **caractérisé en ce que** l'une au moins unité de dosage (11) pour le au moins un lubrifiant (3) et/ou l'une au moins unité de dosage (12) pour le au moins un dispersant (4) est formée par au moins un piston à mouvement alternatif (17).

4. Dispositif (1) selon l'une quelconque des revendications 1 à 3, **caractérisé en ce que** le au moins un dispositif de transport (13) pour le au moins un lubrifiant (3) et/ou le au moins un dispositif de transport (14) pour le au moins un dispersant (4) est formé par une source d'air comprimé (18) et une conduite d'air comprimé (19).

5. Dispositif (1) selon l'une quelconque des revendications 1 à 4, **caractérisé en ce qu'**une unité de commande (20) est prévue, laquelle est reliée à chaque unité de dosage (11, 12) et à chaque dispositif de transport (13, 14).

6. Dispositif (1) selon la revendication 5, **caractérisé en ce que** l'unité de commande (20) est reliée à un capteur (21) pour détecter la vitesse (v) du véhicule ferroviaire (7), à des capteurs (22) pour détecter des paramètres d'environnement et/ou à des capteurs (23) pour détecter le coefficient de frottement (p) entre la roue ferroviaire (6) et le rail (8).

7. Dispositif (1) selon l'une quelconque des revendications 1 à 6, **caractérisé en ce qu'**au moins un lubrifiant (3) est formé par un liquide de préférence biodégradable.

8. Dispositif (1) selon l'une quelconque des revendications 1 à 7, **caractérisé en ce qu'**au moins un lubrifiant (3) est formé par une matière solide de préférence biodégradable.

9. Dispositif (1) selon l'une quelconque des revendications 1 à 8, **caractérisé en ce qu'**au moins un dispersant (4) est formé par du sable, de préférence du sable siliceux.

10. Procédé pour déverser un mélange d'optimisation de friction (2) composé d'au moins un lubrifiant (3) et d'au moins un dispersant (4) dans la fente (5) entre la roue ferroviaire (6) d'un véhicule ferroviaire (7) et un rail (8), dans lequel au moins un lubrifiant (3) provenant d'au moins un récipient de stockage (9) est dosé par l'intermédiaire d'au moins une unité de dosage (11) et transporté par l'intermédiaire d'au moins un dispositif de transport (13) et au moins un dispersant (4) provenant d'au moins un récipient de stockage (10) est dosé par l'intermédiaire d'au moins une unité de dosage (12) et transporté par l'intermédiaire d'au moins un dispositif de transport (14) vers une buse de déversement (15) commune pour déverser le au moins un lubrifiant (3) et le au moins un dispersant (4) dans la fente (5) entre la roue ferroviaire (6) et le rail (8), **caractérisé en ce que** le au moins un lubrifiant (3) et le au moins un dispersant (4) sont dosés séparément l'un de l'autre et sont transportés vers la buse de déversement (15) commune, de sorte que le mélange d'optimisation de friction (2) n'est formé du au moins un lubrifiant (3) et du au moins un dispersant (4) que lors du déversement dans la fente (5) entre la roue ferroviaire (6) et le rail (8), et que l'air comprimé dans une conduite d'air comprimé (25) supplémentaire est transporté dans la buse de déversement (15) commune.

11. Procédé selon la revendication 10, **caractérisé en ce que** le au moins un lubrifiant (3) et/ou le au moins un dispersant (4) est dosé avec au moins une roue à alvéoles (16).

12. Procédé selon la revendication 10 ou 11, **caractérisé en ce que** le au moins un lubrifiant (3) et/ou le au moins un dispersant (4) est dosé avec au moins un piston à mouvement alternatif (17).

13. Procédé selon l'une quelconque des revendications 10 à 12, **caractérisé en ce que** le au moins un lubrifiant (3) et/ou le au moins un dispersant (4) est transporté vers la buse de déversement (15) commune de manière pneumatique au moyen d'air comprimé.

14. Procédé selon l'une quelconque des revendications 10 à 13, **caractérisé en ce que** le au moins un lubrifiant (3) et/ou le au moins un dispersant (4) sont dosés séparément l'un de l'autre par l'intermédiaire d'une unité de commande (20).

15. Procédé selon la revendication 14, **caractérisé en ce que** la commande du dosage et transport du au moins un lubrifiant (3) et du au moins un dispersant (4) est réglée en fonction de la vitesse (v) du véhicule ferroviaire (7), des paramètres d'environnement détectés et/ou du coefficient de frottement (p) détecté entre la roue ferroviaire (6) et le rail (8).

16. Procédé selon l'une quelconque des revendications 10 à 15, **caractérisé en ce qu'**un liquide de préférence biodégradable est utilisé en tant qu'au moins un lubrifiant (3).

17. Procédé selon l'une quelconque des revendications 10 à 16, **caractérisé en ce qu'**une matière solide de préférence biodégradable est utilisée en tant qu'au moins un lubrifiant (3).

18. Procédé selon l'une quelconque des revendications 10 à 17, **caractérisé en ce que** du sable, de préférence du sable siliceux, est utilisé en tant qu'au moins un dispersant (4).
